# EUROPÄISCHE PATENTANMELDUNG

(11) **EP 0 532 857 A1**
(43) Veröffentlichungstag der Anmeldung: **24.03.1993**
(21) Anmeldenummer: 92112163.8
(22) Anmeldetag: 16.07.1992
(51) Int. Cl.: C01B 33/107, A62D 3/00

(54) **Verfahren zur Aufarbeitung von Rückständen einer Chlorsilandestillation mit Wasserdampf**

(30) Priorität: 17.09.1991 DE 4130881; 17.09.1991 DE 4130880
(71) Anmelder: HÜLS AKTIENGESELLSCHAFT, D-45764 Marl (DE)
(72) Erfinder: Ruff, Klaus, W-5210 Troisdorf (DE)

(57) **Zusammenfassung**

Es wird ein Verfahren zur kontinuierlichen Aufarbeitung von Rückständen einer Chlorsilandestillation durch Hydrolyse mit Wasserdampf beschrieben. Die Hydrolyse erfolgt im Fall der kontinuierlichen Durchführung bei einer Anfangstemperatur von höchstens 160 °C und einer Endtemperatur von mindestens 170 °C.

Im Fall der batchweisen Durchführung werden im Hydrolysereaktor bestimmte Wasserdampfmengen und Temperaturen eingestellt.

## Beschreibung

Gegenstand der vorliegenden Erfindung ist ein Verfahren zur Aufarbeitung von Rückständen, die bei der Destillation von Chlorsilanen anfallen, durch Hydrolyse mit Wasserdampf unter Freisetzung von Chlorwasserstoff.

Chlorsilane, wie Trichlorsilan und Siliciumtetrachlorid, können z. B. durch Umsetzung von Rohsilicium mit Chlor oder Chlorwasserstoff hergestellt werden. Bei ihrer industriellen Herstellung werden meistens Rohsiliciumsorten eingesetzt, deren Siliciumgehalt 85 Gew.-% und mehr beträgt. Weitere Bestandteile des Rohsiliciums sind hauptsächlich Eisen, Aluminium, Calcium und Titan, die bei der Umsetzung mit Chlor oder Chlorwasserstoff in Ihre Chloride überführt werden. Außer diesen Metallchloriden fallen noch Hochsieder, wie Hexachlordisiloxan und Pentachlordisiloxan, an.

Üblicherweise werden die Rückstände destillativ von den Chlorsilanen grob abgetrennt. Je nach Destillationsbedingungen liegt der Rückstand als Suspension oder Feststoff vor, der einer gesonderten Aufarbeitung zur Entsorgung bedarf.

Sinnvollerweise wird die Destillation der Chlorsilane möglichst vollständig durchgeführt, da im Rückstand verbleibende Chlorsilane nicht mehr in Nutzprodukte umgesetzt werden und somit einen Wertverlust bedeuten. Ein weitgehend eingedampfter Rückstand hat eine typische Zusammensetzung von etwa 80 Gew.-% Aluminium und Eisenchlorid, 16 Gew.-% Hexa- und Pentachlordisiloxan sowie Titantetrachlorid und 4 Gew.-% Siliciumtetrachlorid.

Aus der DE-AS 21 61 641 ist bekannt, den Destillationsrückstand aus einer Chlorsilanproduktion in einen beheizbaren Schaufeltrockner einzufüllen, unter Umwälzen des Inhalts Chlorsilane bei entsprechender Temperatur abzutreiben und nach erfolgter Trocknung des Feststoffs zur Hydrolyse Wasserdampf in den Schaufeltrockner einzublasen. Nachteilig an einem solchen Batch-Verfahren ist der Umstand, daß man den Hydrolyserückstand nach erfolgter Hydrolyse nicht vollständig aus dem Mischer entfernen kann, so daß an den Wänden und den Schaufeln Hydrolyserückstand zurückbleibt, der mit einer erneuten Füllung von chlorsilanhaltiger Suspension zu harten, krustenbildenden Substanzen reagiert, die den Hydrolysereaktor zuwachsen lassen und die Funktionstüchtigkeit der für die Verfahrensschritte Trocknung und Hydrolyse erforderlichen Absperrorgane stark beeinträchtigen.

In der DE-PS 36 42 285 wird vorgeschlagen, Trocknung und Hydrolyse in zwei verschiedenen Apparaten bei verschiedenen Temperaturen durchzuführen, wobei die Trocknung bei niedriger Temperatur und die Hydrolyse bei höherer Temperatur erfolgt. Um bei der Trocknung den Anteil an Aluminiumchlorid im Destillat niedrig zu halten, sollte die Trocknungstemperatur 130 bis 140 °C nicht wesentlich überschreiten. Andererseits benötigt eine wirkungsvolle Hydrolyse Temperaturen von 170 °C und höher, wobei steigende Temperatur naturgemäß zu besseren Hydrolyseumsätzen führt.

Auch dieses Verfahren ist nachteilig, da der Temperatursprung, den der zu behandelnde Rückstand beim Übergang von dem Verfahrensschritt "Trocknung" zum Verfahrensschritt "Hydrolyse" erfährt, eine Teilflashverdampfung des Rückstandes bewirkt, wodurch ein Teil der Hydrolysereaktion in der Gasphase erfolgt und diese Hydrolyseprodukte infolge ihres geringen Gewichtes mit dem Abgasstrom aus dem Reaktor ausgetragen werden. Die Abtrennung des Feststoffs aus dem den Reaktor verlassenden Gasstrom, der aus Chlorwasserstoff und nicht umgesetztem Wasserdampf besteht, ist aufwendig: werden Staubfilter eingesetzt, erfordern diese eine aufwendige Ausrüstung, um eine Kondensation von Salzsäure zu vermeiden, wobei die Standzeiten der Filtertücher infolge Verstopfungsneigung kurz sind. Werden andererseits Wäscher eingesetzt, muß der Feststoff mechanisch aus Salzsäure abgetrennt und, da in salzsäurefeuchtem Zustand nicht deponierbar, nachbehandelt werden, z. B. durch Trocknen.

Auch ein Arbeiten nach DE-AS 21 61 641 führt zu hohem Feststoffaustrag über die die Hydrolyse verlassende Gasphase.

Es bestand daher das Problem, ein Verfahren zu finden, das die dargestellten Nachteile nicht aufweist. Insbesondere wurde ein Verfahren angestrebt, welches wirtschaftlich arbeitet und bei dem nur wenig Feststoff mit dem den Hydrolysereaktor verlassenden Gasstrom ausgetragen wird.

Dieses Problem wird dadurch gelöst, daß man die Hydrolyse im Fall der kontinuierlichen Durchführung bei einer Temperatur von höchstens 160 °C beginnt und bei einer Temperatur von mindestens 170 °C beendet.

Bei dem erfindungsgemäßen Verfahren durchläuft der Rückstand vorzugsweise nacheinander verschiedene Temperaturzonen. Erfindungsgemäß beginnt man die Hydrolyse bei einer Temperatur von höchstens 160 °C, vorzugsweise 130 bis 140 °C. Anschließend befördert man den Feststoff in Reaktorzonen höherer Temperatur, vorzugsweise von mindestens 200 °C. Wenn nötig, kühlt man den Feststoff zur Erleichterung der nachfolgenden Lagerung oder zur Wärmerückgewinnung in Kühlzonen wieder ab.

Um den Feststoffaustrag über die Gasphase niedrig zu halten, muß das Aufheizen des Rückstandes auf Hydrolysetemperatur unter Einspeisung von Wasserdampf erfolgen. Ein Überangebot an wasserdampf bei niedrigen Temperaturen führt aber zu unvollständigem Wasserdampfumsatz, da naturgemäß eine Hydrolyse bei höheren Temperaturen wirkungsvoller ist. Die Menge an nicht umgesetztem Wasserdampf ist klein zu halten, um den entstehenden Chlorwasserstoff nicht unnötig zu verdünnen, was seine Aufarbeitung erschwert. Nach einer Aufarbeitung, z. B. in einer Absorption/Desorption, kann der Chlorwasserstoff wieder im Hauptverfahren zur Hydrochlorierung von Silicium eingesetzt werden.

Im Fall der batchweisen Durchführung der Hydrolyse wird das Problem dadurch gelöst, daß man Trocknung und Hydrolyse in getrennten Apparaten durchführt, den vorgetrockneten Rückstand batchweise in einen Hydrolysereaktor einfüllt, dessen Anfangstemperatur mindestens 5 °C niedriger als die Trocknungstemperatur ist, bereits beim Aufheizen auf Hydrolysetemperatur Wasserdampf zuspeist, und zwar in einer Menge von mindestens 0,2 kg/h pro kg vorgelegten Rückstand, sofern die Temperatur weniger als 170 °C, beträgt, und man ab 170 °C die zugespeiste Wasserdampfmenge auf mindestens 0,3 kg/h pro kg vorgelegten Rückstand erhöht.

An den Hydrolysereaktor werden keine besonderen Anforderungen gestellt: jeder beheizbare Mischapparat ist geeignet.

Das erfindungsgemäße Verfahren ist an keinen bestimmten Reaktortyp gebunden. Die Temperaturzonen, die der zu hydrolysierende Feststoff durchläuft, können vertikal übereinander angeordnet sein, wobei der Feststoff durch Schwerkraft von einer in die nächste Temperaturzone fällt. Auch ist eine horizontale Anordnung der Temperaturzonen möglich, wenn der Feststoff durch ein Förderorgan, wie z. B. Mischerschaufeln bei einem liegenden zylindrischen Reaktor, den einzelnen Temperaturstufen nacheinander zugeführt wird. Eine Kombination von horizontaler und vertikaler Anordnung ist ebenfalls durchführbar. Eine gute Durchmischung des Feststoffs in den einzelnen Temperaturzonen der Hydrolyse ist vorteilhaft, die Durchmischung kann mit üblicher Ausrüstung durchgeführt werden.

Auch in bezug auf die Wasserdampfzufuhr bestehen keinerlei Beschränkungen. Wasserdampf kann über einen einzigen Stutzen in den Hydrolysereaktor eingeleitet werden oder an mehreren Stellen, um durch Angleichung der Dampftemperatur an die Temperatur der jeweiligen Hydrolysezone ein optimales Hydrolyseergebnis zu erhalten.

Das erfindungsgemäße Verfahren wird nachfolgend anhand der Beispiele erläutert.

### Beispiel 1 (kontinuierliches Verfahren)

In einem Laborschaufeltrockner mit horizontaler Rührwelle wird Rückstand von pulvriger bis klumpiger Konsistenz in einer Menge von 300 g/h kontinuierlich an einem Ende des Trockners eingetragen und mit Wasserdampf in einer Menge von 150 g/h zur Reaktion gebracht. Am anderen Ende des Trockners befindet sich ein Bodenauslaß für den Hydrolyserückstand, darüber der Gasauslaß. Das Mischerwerkzeug im Trockner wird mit einer solchen Drehzahl betrieben, daß die Verweilzeit des Feststoffs im Mischer 1 Minute beträgt. Der Mischer ist mit 2 Heizzonen ausgerüstet; diejenige am Rückstandseintrag wird auf 140 °C geheizt, die andere am Austrag auf 220 °C.

In der Abgasleitung befindet sich ein Staubfilter, in dem 5 g/h Staub abgeschieden werden.

### Beispiel 2 (Vergleichsbeispiel, kontinuierliches Verfahren)

Beispiel 1 wird wiederholt. Bei sonst gleichen Bedingungen wird die Temperatur der Eintrittszone auf 200 °C erhöht und die Temperatur der Austrittszone belassen. Im Staubfilter fallen 60 g/h Staub an.

### Beispiel 3 (Batch-Verfahren)

In einem 5-l-Mischer werden bei einer Temperatur von 130 °C 1 000 g vorgetrockneter Rückstand eingefüllt, der zuvor durch Eindampfen bei 140 °C aus einer Rückstandsuspension gewonnen wurde. Unter Einleitung von Wasserdampf von 160 °C in einer Menge von 300 g/h wird der Mischerinhalt bei einer Drehzahl des Mischwerkzeugs von 300 Umdrehungen pro Minute in 10 Minuten auf 180 °C aufgeheizt. Nach Erreichen der Hydrolysetemperatur von 180 °C wird die Dampfzufuhr auf 3 000 g/h gesteigert und die Hydrolyse noch 1 Stunde lang durchgeführt. Die den Hydrolysereaktor über Kopf verlassenden Brüden passieren ein Staubfilter. Nach Beendigung der Hydrolyse werden im Mischer 567 g Hydrolyserückstand erhalten, das Staubfilter enthält 63 g Hydrolyserückstand.

### Beispiel 4 (Vergleichsbeispiel, Batch-Verfahren)

Beispiel 3 wird wiederholt, wobei man den vorgetrockneten Rückstand in einen 180 °C heißen Mischer einfüllt und mit 3 000 g Wasserdampf/h beaufschlagt. Nach 1 Stunde werden an Hydrolyserückstand 385 g im Mischer, 130 g im Staubfilter und 115 g als Filterdurchschlag gefunden.

### Beispiel 5 (Batch-Verfahren)

In einen 10-l-Mischer werden bei 135 °C 1,5 kg vorgetrockneter Rückstand eingefüllt, der zuvor bei 158 °C vorgetrocknet wurde. Bei einer Drehzahl des Mischerwerkzeugs von 40/min wird in 2 Stunden die Mischertemperatur auf 230 °C gesteigert. Von Anfang an werden 300 g Wasserdampf/h von 190 °C in den Mischer geleitet, ab einer Mischertemperatur von 170 °C 450 g/h. Nach Reaktionsende werden im Mischer 840 g Hydrolyserückstand gefunden, im Staubfilter 50 g.

### Beispiel 6 (Vergleichsverfahren, Batch-Verfahren)

Beispiel 5 wird wiederholt, wobei man von Anfang an 150 g Wasserdampf/h einleitet, ab einer Mischertemperatur von 150 °C 250 g/h und ab einer Mischertemperatur von 170 °C 500 g/h. Nach Reaktionsende liegen im Mischer 690 g Hydrolyserückstand vor, im Staubfilter 200 g.

## Patentansprüche

1. Verfahren zur Aufarbeitung von Rückständen einer Chlorsilandestillation durch Hydrolyse mit Wasserdampf in an sich bekannter Weise, dadurch gekennzeichnet, daß man die Hydrolyse im Fall der kontinuierlichen Durchführung bei einer Temperatur von höchstens 160 °C beginnt und bei einer Temperatur von mindestens 170 °C beendet.

2. Verfahren nach Anspruch 1, dadurch gekennzeichnet, daß der zu hydrolysierende Rückstand nacheinander Reaktionszonen unterschiedlicher Temperatur durchläuft.

3. Verfahren nach Anspruch 2, dadurch gekennzeichnet, daß bei der Reaktion auf eine Eingangszone mit einer Temperatur von 130 bis 140 °C mindestens eine weitere Reaktionszone mit einer Temperatur von mindestens 200 °C folgt.

4. Verfahren zur Aufarbeitung von Rückständen einer Chlorsilandestillation durch Hydrolyse mit Wasserdampf in an sich bekannter Weise, dadurch gekennzeichnet, daß man im Fall der batchweisen Durchführung der Hydrolyse einen vorgetrockneten Rückstand in einen Hydrolysereaktor einfüllt, dessen Anfangstemperatur mindestens 5 °C niedriger als die Trocknungstemperatur ist, bereits beim Aufheizen auf Hydrolysetemperatur Wasserdampf zuspeist, und zwar in einer Menge von mindestens 0,2 kg/h pro kg vorgelegten Rückstand, sofern die Temperatur weniger als 170 °C beträgt, und man ab 170 °C die zugespeiste Wasserdampfmenge auf mindestens 0,3 kg/h pro kg vorgelegten Rückstand erhöht.
